# EUROPÄISCHE PATENTSCHRIFT

(11) **EP 3 988 437 B1**
(45) Veröffentlichungstag und Bekanntmachung des Hinweises auf die Patenterteilung: **24.07.2024**
(21) Anmeldenummer: 20203053.2
(22) Anmeldetag: 21.10.2020
(51) Int. Cl.: B62K 19/34, B62M 6/55

(54) **ELEKTROFAHRRAD-ANTRIEBSEINHEITS-BEFESTIGUNGSANORDNUNG**
ELECTRIC BICYCLE DRIVE UNIT ATTACHMENT ASSEMBLY
DISPOSITIF DE FIXATION D'UNE UNITÉ D'ENTRAÎNEMENT DE BICYCLETTE ÉLECTRIQUE

(43) Veröffentlichungstag der Anmeldung: 27.04.2022
(73) Patentinhaber: SRAM, LLC, Chicago, IL 60607 (US)
(72) Erfinder: Fiseni, Alexander, 41460 Neuss (DE); Greven, Dietmar, 41460 Neuss (DE); Otzen, Kai, 41460 Neuss (DE)
(74) Vertreter: terpatent PartGmbB

(56) Entgegenhaltungen:
- WO-A1-2020/104239
- WO-A1-2020/151889

## Beschreibung

Die Erfindung bezieht sich auf eine Elektrofahrrad-Antriebseinheits-Befestigungsanordnung zur Befestigung einer elektrischen Mittelmotor-Antriebseinheit an einem Fahrradrahmen eines Elektrofahrrads.

Unter einem Elektrofahrrad ist vorliegend jeder Fahrradtyp zu verstehen, der eine unterstützende elektrische Antriebseinheit aufweist, die die von einer Fahrerperson in die Tretkurbel eingeleitete humane Antriebsleistung durch eine entsprechende elektromotorische Antriebsleistung ergänzt, soweit dies gewünscht ist. Die vorliegende Erfindung bezieht sich auf eine Befestigungsanordnung für eine sogenannte Mittelmotor-Antriebseinheit, die sowohl die Tretkurbelwelle rotatorisch lagert als auch ein Abtriebselement aufweist, beispielsweise mindestens ein Kettenblatt, das ein Hinterrad des Elektrofahrrads antreibt. Bei einer Mittelmotor-Antriebseinheit können kurzzeitig sehr hohe mechanische Kräfte auf die Antriebseinheit einwirken, die durch die Befestigungsanordnung auf den Fahrradrahmen übertragen werden müssen, da insbesondere in sehr dynamischen Fahrsituationen das gesamte Fahrergewicht von der Antriebseinheit über die Befestigungsanordnung auf den Fahrradrahmen übertragen wird.

Aus DE 10 2016 112 778 A1 und DE 10 2017 201 617 A1 sind Befestigungsanordnungen bekannt, bei denen der Fahrradrahmen zwei zueinander parallele vertikale Rahmenflansche aufweist, an denen hierzu korrespondierende vertikale Gehäuseflansche des Antriebseinheits-Gehäuses starr fixiert sind. Zwar bietet eine steife Befestigung der Antriebseinheit an den zwei Rahmenflanschen grundsätzlich eine bezüglich aller Raumachsen stabile Anbindung der Antriebseinheit an den Fahrradrahmen, jedoch müssen bei der Montage der Antriebseinheit in die Befestigungsanordnung Herstellungstoleranz-bedingte Spalte zwischen den vertikalen Rahmenflanschen und dem Antriebseinheits-Gehäuse ausgeglichen werden. Ferner wird durch die steife Befestigung der Körperschall der Antriebseinheit ungedämpft auf den Fahrradrahmen übertragen.

Aus der gattungsgemäßen WO 2020/104239 A1 und der WO 2020/151889 A1 sind Befestigungsanordnungen für Elektrofahrrad-Antriebseinheiten bekannt, bei denen jeweils in einer vertikalen Längsebene stehende blattartige separate Befestigungselemente vorgesehen sind.

Aufgabe der Erfindung vor diesem Hintergrund ist es, eine stabile und Körperschall-reduzierende Elektrofahrrad-Antriebseinheits-Befestigungsanordnung zu schaffen.

Diese Aufgabe wird erfindungsgemäß gelöst mit einer Elektrofahrrad-Antriebseinheits-Befestigungsanordnung mit den Merkmalen des Anspruchs 1.

Die erfindungsgemäße Elektrofahrrad-Antriebseinheits-Befestigungsanordnung realisiert eine bezüglich der Querachse federnde Befestigung der elektrischen Mittelmotor-Antriebseinheit an der Antriebsaufnahme des Fahrradrahmens. Die Antriebsaufnahme weist zwei im Wesentlichen vertikale, zueinander parallele, rahmenfeste und steife Rahmenflansche auf, die im Wesentlichen in einer vertikalen Elektrofahrrad-Längsebene stehen. Unter einer federnden Befestigung ist vorliegend eine Befestigung zu verstehen, die in der Fahrradrahmen-Querachse in einem begrenzten Bereich von beispielsweise wenigen Millimetern eine elastische Beweglichkeit der Antriebseinheit gegenüber der Antriebsaufnahme ermöglicht und erlaubt.

Die Befestigungsanordnung weist mindestens zwei im Wesentlichen vertikal in einer Elektrofahrrad-Längsebene stehende Federstege auf, wobei der Federsteg jeweils den Rahmenflansch direkt oder indirekt mit der Antriebseinheit elastisch verbindet. Die Grundebene der beiden Federstege liegt jedenfalls ungefähr in einer Vertikalebene, muss jedoch nicht exakt in einer Vertikalebene liegen, sondern kann auch in bis zu maximal 20° geneigt hierzu sein. Die flächigen Federstege bilden sogenannte Festkörpergelenke.

Die beiden Federstege sind bezüglich ihrer Grundflächen derart dimensioniert und angeordnet, dass die Antriebseinheit in der Elektrofahrrad-Längsrichtung und in der Elektrofahrrad-Hochachse annähernd unbeweglich ist in Bezug auf die Antriebsaufnahme bzw. den Fahrradrahmen.

Die Befestigungsanordnung weist einen separaten einstückigen Adapter auf, der einen rahmenzugewandten Adapterflansch und einen antriebszugewandten Adapterflansch aufweist, wobei die beiden genannten Adapterflansche durch den Federsteg direkt miteinander verbunden sind. Besonders bevorzugt sind zwei einstückige Adapter vorgesehen, nämlich ein linker Adapter zur Befestigung der Antriebseinheit an dem linken Rahmenflansch und ein rechter Adapter zur Befestigung an dem an dem rechten Rahmenflansch. Jedem Rahmenflansch sind vorzugsweise zwei bis vier Adapter zugeordnet, sodass die Antriebseinheit mit insgesamt vier bis maximal acht Adaptern an dem Fahrradrahmen querelastisch angebunden ist.

Besonders bevorzugt ist der Adapter von einem Adapterkörper aus einem anderen Werkstoff gebildet, als der Werkstoff der rahmenseitigen Antriebsaufnahme und der Werkstoff des Antriebsgehäuses der Antriebseinheit. Der Werkstoff für den Adapter und insbesondere für die Federstege kann also gezielt in Hinblick auf seiner Federeigenschaften und Dauerfestigkeitseigenschaften ausgewählt werden, wohingegen für den Fahrradrahmen bzw. die Antriebsaufnahme einerseits und das Antriebseinheits-Gehäuse andererseits der jeweils geeignetste Werkstoff gewählt werden kann.

Vorzugsweise steht der rahmenzugewandte Adapterflansch in einer vertikalen Längsebene und steht der antriebszugewandte Adapterflansch in einer Querebene, die im Wesentlichen senkrecht zu dem rahmenseitigen Adapterflansch steht.

Besonders bevorzugt ist vorgesehen, dass jeder Adapter jeweils ein Federsteg-Paar aufweist, wobei die beiden Federstege des Federsteg-Paares parallel zueinander angeordnet sind. Der Adapter bildet also im Wesentlichen ein Parallelogramm, wobei der Adapter im entspannten Zustand bevorzugt ein annähernd rechtwinkliges Parallelogramm bildet. Jeder Adapter alleine erlaubt daher ausschließlich eine Federbewegung in der Querachse, erlaubt jedoch keine Schwenkbewegung um eine Elektrofahrrad-Längsachse.

Besonders bevorzugt ist vorgesehen, dass die Adapter räumlich zwischen den beiden Rahmenflanschen angeordnet sind, also jeweils proximal in Bezug auf die Rahmenflansche angeordnet sind. Die Rahmenflansche bilden also äußerlich die eine optische Verblendung für die Adapter, so dass ein einfaches und elegantes Erscheinungsgebiet realisiert werden kann.

Vorzugsweise liegen die rahmenzugewandten Adapterflansche spaltfrei und kraftschlüssig an dem jeweils zugeordneten Rahmenflanschen an. Dies ist deshalb möglich, weil die Federstege einen Toleranzausgleich für fertigungsbedingte Unterschiede des Querabstandes des linken von dem rechten Rahmenflansch ermöglichen.

Bei der Dimensionierung der gesamten Befestigungsanordnung wird von einer maximalen dynamischen Belastung in Längsrichtung von 2000 N, in Querrichtung von 600 N und in Hochrichtung von 3000 N ausgegangen. Die Befestigungsanordnung, mechanisch definiert aus der Summe aller Federstege, ist derart dimensioniert, dass bei den vorgenannten Maximal-Belastungen in Hochrichtung und in Längsrichtung eine maximale Auslenkung im Zehntelmillimeter-Bereich auftritt, beispielsweise von höchstens 0,1 bis 0,7 mm, wohingegen in Querrichtung bei den genannten Kräften eine maximale Auslenkung von 0,7 bis ca. 5,0 mm auftritt.

Alle Federstege bzw. alle Adapter zusammen erlauben also eine Auslenkung in Querrichtung von beispielsweise bis zu maximal 5,0 mm bei einer dynamischen Belastung der Antriebseinheit mit einer Fahrerperson-Masse von 100- 130 kg in einem Neigungswinkel von 30°. Hierdurch werden insbesondere beim sogenannten Wiegetritt Kraftpeaks seitlich abgefedert, wodurch die strukturelle Peakbelastung in der Hochachse des Elektrofahrrads reduziert ist. Dies erlaubt eine weniger massive und weniger steife Auslegung sowohl der Antriebsaufnahme als auch des Antriebsgehäuses der Antriebseinheit, wodurch wiederum nennenswerte Gewichtseinsparungen ermöglicht werden.

Im Folgenden wird ein Ausführungsbeispiel der Erfindung anhand der Zeichnungen näher erläutert. Es zeigen:
Figur 1 einen Querschnitt einer Elektrofahrrad-Antriebseinheits-Befestigungsanordnung mit einer Mittelmotor-Antriebseinheit, die mit Befestigungsanordnungs-Adaptern an einer fahrradrahmenseitigen Antriebsaufnahme montiert ist,
Figur 2 die Elektrofahrrad-Antriebseinheits-Befestigungsanordnung der Figur 1 im demontierten Zustand, und
Figur 3 den Adapter der Figuren 1 und 2 in vergrößerter Darstellung.

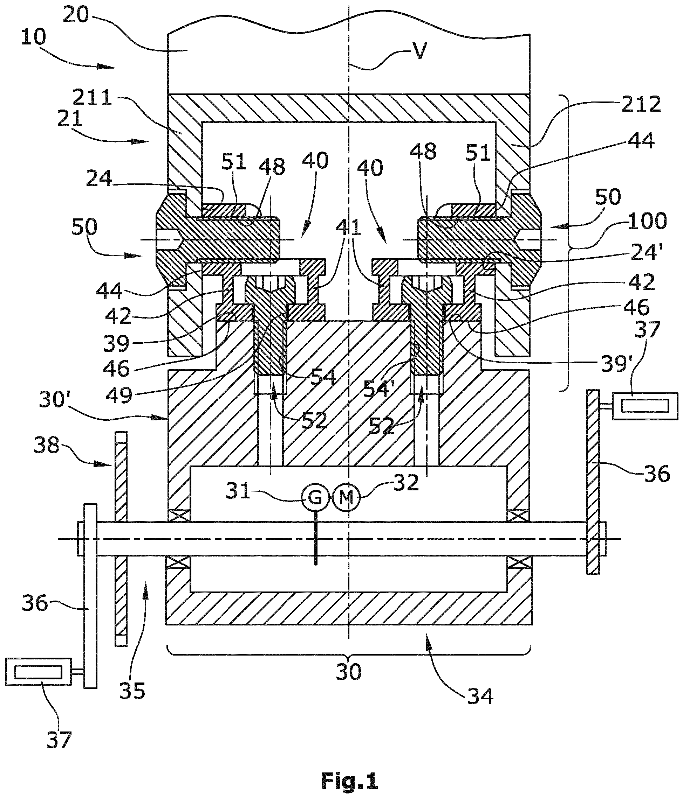

In der Figur 1 ist schematisch ein Elektrofahrrad 10 mit einem Fahrradrahmen 20 und einer Mittelmotor- Antriebseinheit 30 im vertikalen Querschnitt dargestellt. Die Antriebseinheit 30 ist vorliegend rein unterstützend ausgelegt, und unterstützt im Fahrbetrieb die humane Antriebsleistung einer Fahrerperson. Von dem Fahrradrahmen 20 ist vorliegend nur ein kurzer Abschnitt eines Rahmen-Unterrohres dargestellt, an dem die Antriebsaufnahme 21 befestigt ist, beispielsweise durch eine Verschweißung.

Die Mittelmotor- Antriebseinheit 30 weist ein geschlossenes Antriebseinheits-Gehäuse 34 aus Metall auf, in dem ein elektrischer Antriebsmotor 32 und ein Getriebe 31 angeordnet sind. Das Getriebe 31 kann eine starre Übersetzung aufweisen, kann ein Schaltgetriebe sein oder ein stufenloses Getriebe sein. In dem Antriebseinheits-Gehäuse 34 ist ferner eine in Querrichtung verlaufende Abtriebswelle 35 gelagert, die vorliegend auch die Tretlagerwelle bildet. Grundsätzlich können die Abtriebswelle und die Tretlagerwelle jedoch auch getrennt voneinander vorgesehen sein, beispielsweise konzentrisch zueinander angeordnet sein. An den beiden Längsenden der Abtriebswelle 35 sind eine linke und eine rechte Tretkurbel 36 und an deren Enden jeweils Tretpedale 37 vorgesehen. An der Abtriebswelle 35 ist drehfest ein als Zahnrad mit vorzugsweise mehr als 20 Zähnen ausgebildetes Abtriebselement 38 vorgesehen, das über einen Kettentrieb ein Hinterrad-Ritzel eines Hinterrades des Fahrrads 10 antreibt.

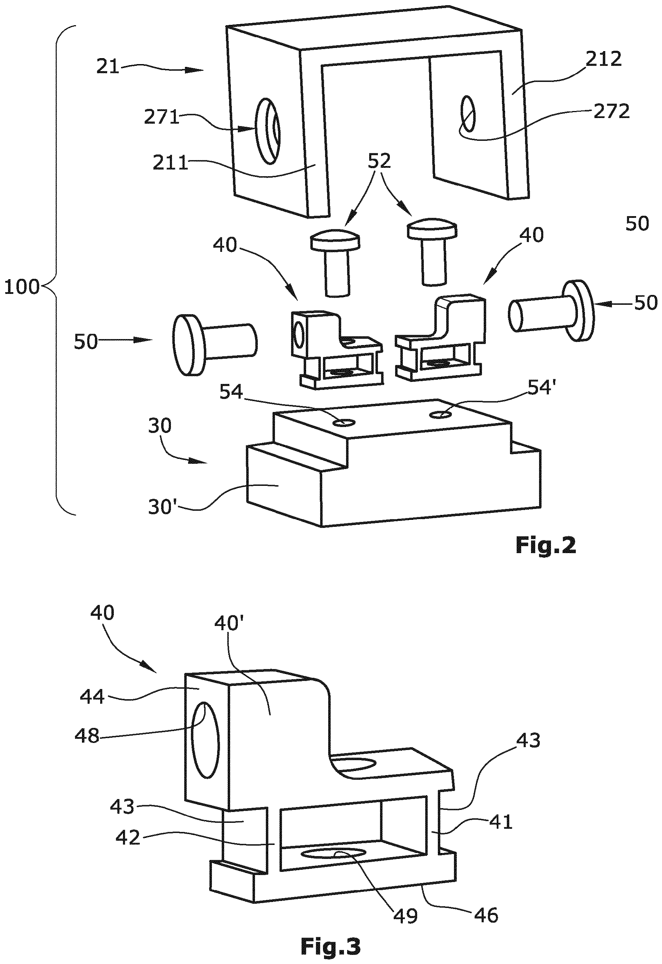

In den Figuren 1 und 2 ist eine Befestigungsanordnung 100 dargestellt, durch die die Antriebseinheit 30 an der Antriebsaufnahme 21 des Fahrradrahmens 20 in Querrichtung federnd befestigt ist. Die Antriebsaufnahme 21 weist zwei zueinander parallele rahmenfeste und jeweils in einer Vertikalebene angeordnete Metall-Rahmenflansche 211,212 auf, sodass hierdurch eine klammerartige, nach unten offene und im Querschnitt U-förmige Aufnahme gebildet ist. Die proximalen Innenseiten der beiden Rahmenflansche 211,212 bilden jeweils ebene Flanschflächen 24,24' die ungefähr in einer vertikalen Längsebene stehen, die parallel ist zu einer mittigen vertikalen Elektrofahrrad-Längsebene V.

Die Befestigungsanordnung 100 weist beispielsweise sechs einzelne separate Adapter 40 auf, durch die die Antriebseinheit 30 an der Antriebsaufnahme 21 in Querrichtung federnd befestigt ist. In der Figur 1 sind zwei in einer Querebene angeordnete identische Adapter 40 beispielhaft dargestellt, die spiegelsymmetrisch zur mittigen Elektrofahrrad-Längsebene V angeordnet sind. Jeder Adapter 40 besteht aus einem einstückigen Adapterkörper 40' aus einem geeigneten metallischen Werkstoff.

Der Adapter 40 bzw. der Adapterkörper 40' weist einen rahmenzugewandten und in einer vertikalen Längsebene stehenden ebenen Adapterflansch 44 und einen hierzu senkrecht angeordneten antriebszugewandten ebenen Adapterflansch 46 auf. Die beiden Adapterflansche 44,46 sind physisch durch ein Federsteg-Paar 43 miteinander verbunden, wobei die beiden flächig ausgebildeten Federstege 41,42 des Federsteg-Paares 43 parallel zueinander angeordnet sind und ebenfalls ungefähr in einer vertikalen Längsebene und damit ungefähr parallel zu den rahmenzugewandten Adapterflanschen 44 und den aufnahmeseitigen Flanschflächen 24,24' stehen. Ungefähr in der Mitte des rahmenzugewandten Adapterflansches 44 ist eine Innengewinde-Bohrung 48 vorgesehen, und ungefähr in der Mitte des antriebszugewandten Adapterflansches 46 ist eine durchgehende Steckbohrung 49 vorgesehen. Jeder Rahmenflansch 211,212 weist in der in der Figur 1 dargestellten Querebene jeweils eine gestufte Steckbohrung 271,272 auf, in die jeweils eine Gewindeschraube 50 mit einem Außengewinde 51 eingesteckt ist, die in die Innengewinde-Bohrung 48 der beiden Adapter 40 eingeschraubt ist, wodurch eine im Wesentlichen kraftschlüssige Verbindung des jeweiligen Adapters 40 mit dem betreffenden Rahmenflansch 211,212 hergestellt ist.

Das Antriebseinheits-Gehäuse 34 weist einen Befestigungsteil 30' auf, der drei Paare mit jeweils einem linken und einem rechten antriebsseitigen Befestigungsflansch 39,39' bildet. Die beiden Befestigungsflansche 39,39' eines Befestigungsflansch-Paares liegen jeweils in einer einzigen Ebene, die stets ungefähr senkrecht steht zur mittigen Elektrofahrrad-Längsebene V, jedoch nicht notwendigerweise in einer Horizontalebene liegt. Im vorliegenden Ausführungsbeispiel sind drei Befestigungsflansch-Paare vorgesehen, von denen in der Figur 1 jedoch nur ein Paar im Querschnitt dargestellt ist. In jedem Befestigungsflansch 39,39' ist eine senkrecht zur Flanschebene orientierte Innengewinde-Bohrung 54,54' vorgesehen, in die eine durch die Steckbohrung 49 gesteckte Gewindeschraube 52 eingeschraubt ist, um den jeweiligen Adapter 40 kraftschlüssig mit dem Befestigungsteil 30' bzw. dem Antriebseinheits-Gehäuse 34 zu verbinden.

Der Adapterkörper 40' besteht aus einem metallischen Werkstoff, der gute elastische sowie Dauerfestigkeits-Eigenschaften aufweist. Die flächigen Federstege 41,42 weisen in der Längsebene jeweils eine Grundfläche auf, die mindestens das 3-5 fache der Grundfläche der jeweiligen Federsteg-Stirnseiten beträgt. Die Federstege 41,42 haben in Querrichtung eine federnde Eigenschaft und erlauben eine zerstörungsfreie und nahezu verschleißfreie Quer-Auslenkung von bis zu maximal 3-5 mm, wohingegen in den beiden anderen Raumachsen keine nennenswerten federnde Eigenschaft vorliegt.

Im Ergebnis besteht die gesamte Befestigungsanordnung 100 im vorliegenden Ausführungsbeispiel aus sechs Adaptern 40 mit in der Summe zwölf Federstegen 41,42. Die Federstege 41,42 sind bezüglich ihres Werkstoffes und ihrer Dimensionierung so ausgelegt, dass bei einer Querrichtungs-Last von 600 N, die im Wesentlichen durch die Gewichtskraft einer Fahrerperson in die Antriebseinheit 30 eingeleitet wird, eine Auslenkung der Federstege 41,42 von maximal 3,0 mm auftritt. In jedem Fall sind die Federstege 41,42 der gesamten Befestigungsanordnung 100 jeweils so ausgelegt, dass bei der genannten Querrichtung-Last von 600 N mindestens eine Auslenkung von 1,0 mm auftritt. Hierdurch werden die auftretenden Querkräfte abgefedert, sodass der mechanische Stress für die Befestigungsanordnung 100 entsprechend reduziert ist. Ferner wird durch die querfedernde Aufhängung der Antriebseinheit 30 die Übertragung von Körperschall von der Antriebseinheit 30 auf den Fahrradrahmen 20 verringert.

## Patentansprüche

1. Elektrofahrrad-Antriebseinheits-Befestigungsanordnung (100), durch die eine elektrische Mittelmotor-Antriebseinheit (30) an einer Antriebsaufnahme (21) eines Fahrradrahmens (20) in Querrichtung federnd befestigt ist, wobei die Antriebsaufnahme (21) zwei zueinander parallele rahmenfeste, steife und vertikale Rahmenflansche (211,212) aufweist, die in einer Elektrofahrrad-Längsebene (V) stehen,
mit mindestens zwei im Wesentlichen vertikal in einer Elektrofahrrad-Längsebene stehenden Federstegen (41,42), wobei ein Federsteg (41,42) jeweils einen Rahmenflansch (211,212) direkt mit der Antriebseinheit (30) querelastisch verbindet,
**gekennzeichnet durch**
einen separaten einstückigen Adapter (40), der einen rahmenzugewandten Adapterflansch (44) und einen antriebszugewandten Adapterflansch (46) aufweist, wobei die beiden Adapterflansche (44,46) durch den Federsteg (41,42) direkt miteinander verbunden sind.

2. Die Elektrofahrrad-Antriebseinheits-Befestigungsanordnung (100) nach Anspruch 1, wobei der rahmenzugewandte Adapterflansch (44) in einer vertikalen Längsebene steht und der antriebszugewandte Adapterflansch (46) in einer Querebene steht, die im Wesentlichen senkrecht zu dem rahmenzugewandten Adapterflansch (44) steht.

3. Die Elektrofahrrad-Antriebseinheits-Befestigungsanordnung (100) nach einem der Ansprüche 1 oder 2, wobei jeder Adapter (40) jeweils ein Federsteg-Paar (43) aufweist, wobei die beiden Federstege (41,42) des Federsteg-Paares (43) parallel zueinander angeordnet sind.

4. Die Elektrofahrrad-Antriebseinheits-Befestigungsanordnung (100) nach einem der Ansprüche 1-3, wobei die beiden Adapter (40) räumlich zwischen den beiden Rahmenflanschen (211,212) angeordnet sind.

5. Die Elektrofahrrad-Antriebseinheits-Befestigungsanordnung (100) nach einem der Ansprüche 1-4, wobei die rahmenzugewandten Adapterflansche (44) jeweils spaltfrei an dem jeweils zugeordneten Rahmenflansch (211,212) anliegen.

6. Die Elektrofahrrad-Antriebseinheits-Befestigungsanordnung (100) nach einem der vorangegangenen Ansprüche 1-5, wobei der Adapter (40) von einem Adapterkörper (40') aus einem anderen Werkstoff gebildet ist als die rahmenseitige Antriebsaufnahme (21) und ein Antriebseinheits-Gehäuse (34) der Antriebseinheit (30), das einen antriebsseitigen Befestigungsflansch (39) aufweist.

## Claims

1. Electric bicycle drive unit mounting arrangement (100) by which a centre-mounted electric motor drive unit (30) is transversely suspended at a drive mount (21) of a bicycle frame (20), the drive mount (21) having two parallel, rigid and vertical frame flanges (211, 212) fixed to the frame, which are arranged in an electric bicycle longitudinal plane (V),
with at least two spring bars (41, 42) arranged substantially vertically in an electric bicycle longitudinal plane, wherein a respective spring bar (41, 42) connects a frame flange (211, 212) directly to the drive unit (30) in a transversely elastic manner,
**characterised by**
a separate one-piece adapter (40) having an adapter flange (44) facing the frame and an adapter flange (46) facing the drive, the two adapter flanges (44, 46) being directly connected to each other by the spring bar (41, 42).

2. The electric bicycle drive unit mounting assembly (100) according to claim 1, wherein the frame-facing adapter flange (44) is arranged in a vertical longitudinal plane and the drive-facing adapter flange (46) is arranged in a transverse plane that is substantially perpendicular to the frame-facing adapter flange (44).

3. The electric bicycle drive unit mounting arrangement (100) according to one of claims 1 or 2, wherein each adapter (40) has a respective pair of spring bars (43), wherein the two spring bars (41, 42) of the pair of spring bars (43) are arranged parallel to one another.

4. The electric bicycle drive unit mounting arrangement (100) according to one of claims 1-3, wherein the two adapters (40) are spatially located between the two frame flanges (211, 212).

5. The electric bicycle drive unit mounting arrangement (100) according to one of claims 1-4, wherein the adapter flanges (44) facing the frame each bear against the respectively associated frame flange (211, 212) without a gap.

6. The electric bicycle drive unit mounting arrangement (100) according to one of the preceding claims 1-5, wherein the adapter (40) is formed by an adapter body (40') made of a different material than the frame-side drive mount (21) and a drive unit housing (34) of the drive unit (30), which has a drive-side mounting flange (39).

## Revendications

1. Arrangement de fixation d'unité d'entraînement de bicyclette électrique (100), par lequel une unité d'entraînement de moteur électrique central (30) est fixée de manière élastique dans la direction transversale à un réceptacle d'entraînement (21) d'un cadre de bicyclette (20), le réceptacle d'entraînement (21) comprenant deux brides de cadre (211, 212) parallèles, rigides et verticales, solidaires du cadre, qui se trouvent dans un plan longitudinal de bicyclette électrique (V),
avec au moins deux entretoises élastiques (41, 42) se trouvant substantiellement verticalement dans un plan longitudinal de la bicyclette électrique, une entretoise élastique (41, 42) reliant respectivement une bride de cadre (211, 212) directement avec l'unité d'entraînement (30) de manière élastique transversale,
**caractérisé par**
un adaptateur (40) séparé d'une seule pièce, qui comprend une bride d'adaptateur (44) orientée vers le cadre et une bride d'adaptateur (46) orientée vers l'entraînement, les deux brides d'adaptateur (44, 46) étant reliées directement entre elles par la entretoise élastique (41, 42).

2. L'arrangement de fixation d'unité d'entraînement de bicyclette électrique (100) selon la revendication 1, dans lequel la bride d'adaptateur orientée vers le cadre (44) se trouve dans un plan longitudinal vertical et la bride d'adaptateur orientée vers l'entraînement (46) se trouve dans un plan transversal qui est substantiellement perpendiculaire à la bride d'adaptateur orientée vers le cadre (44).

3. L'arrangement de fixation d'unité d'entraînement de bicyclette électrique (100) selon l'une des revendications 1 ou 2, dans lequel chaque adaptateur (40) comprend respectivement une paire de barrettes élastiques (43), les deux entretoises élastiques (41, 42) de la paire de entretoises élastiques (43) étant disposées parallèlement entre elles.

4. L'arrangement de fixation d'unité d'entraînement de bicyclette électrique (100) selon l'une quelconque des revendications 1 à 3, dans lequel les deux adaptateurs (40) sont disposés spatialement entre les deux brides de cadre (211, 212).

5. L'arrangement de fixation d'unité d'entraînement de bicyclette électrique (100) selon l'une des revendications 1-4, dans lequel les brides d'adaptateur (44) tournées vers le cadre s'appliquent chacune sans fente contre la bride de cadre (211, 212) respectivement associée.

6. L'arrangement de fixation d'unité d'entraînement de bicyclette électrique (100) selon l'une quelconque des revendications précédentes 1-5, dans lequel l'adaptateur (40) est formé par un corps d'adaptateur (40') d'un matériau différent de celui du réceptacle d'entraînement côté cadre (21) et un boîtier d'unité d'entraînement (34) de l'unité d'entraînement (30), qui comprend une bride de fixation côté entraînement (39).
